(19) Europäisches Patentamt
European Patent Office
Office européen des brevets

(11) **EP 4 450 543 A1**

(12) **EUROPEAN PATENT APPLICATION**
published in accordance with Art. 153(4) EPC

(43) Date of publication:
**23.10.2024 Bulletin 2024/43**

(21) Application number: 22906917.4

(22) Date of filing: **10.08.2022**

(51) International Patent Classification (IPC):
*C08J 9/04* (2006.01)    *C08J 9/06* (2006.01)
*C08K 3/013* (2018.01)    *C08L 25/04* (2006.01)
*C08L 27/18* (2006.01)    *C08L 55/02* (2006.01)
*C08L 69/00* (2006.01)

(52) Cooperative Patent Classification (CPC):
**C08J 9/04; C08J 9/06; C08K 3/013; C08L 25/04;
C08L 27/18; C08L 51/04; C08L 55/02; C08L 69/00**

(86) International application number:
**PCT/JP2022/030606**

(87) International publication number:
**WO 2023/112381 (22.06.2023 Gazette 2023/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.12.2021  JP 2021201814**

(71) Applicant: **Techno-UMG Co., Ltd.
Tokyo 105-0021 (JP)**

(72) Inventors:
• **ANDO, Hiroki
  Tokyo 105-0021 (JP)**
• **HIRAISHI, Kentaro
  Tokyo 105-0021 (JP)**

(74) Representative: **Vossius & Partner
Patentanwälte Rechtsanwälte mbB
Siebertstrasse 3
81675 München (DE)**

(54) **THERMOPLASTIC RESIN COMPOSITION FOR FOAM MOLDING, AND FOAM MOLDED ARTICLE THEREOF**

(57)    A thermoplastic resin composition for foam molding comprising: a component (A), listed below, in an amount of 1 to 20 parts by mass; a component (B), listed below, in an amount of 0 to 50 parts by mass; a component (C), listed below, in an amount of 40 to 90 parts by mass; and a component (D), listed below, wherein a total of the components (A) to (C) is 100 parts by mass, and an amount of the component (D) is 0.1 to 5 parts by mass per 100 parts by mass of the total of the components (A) to (C):component (A): a rubber-reinforced styrenic resin (A) derived from polymerization, in the presence of a rubbery polymer (a), of a vinyl monomer (b1), the vinyl monomer (b1) including an aromatic vinyl compound; component (B): a styrenic resin (B) derived from polymerization a vinyl monomer (b2), the vinyl monomer (b2) including an aromatic vinyl compound; component (C): an aromatic polycarbonate resin (C); and component (D):a tetrafluoroethylene polymer (D) having a number average molecular weight of 100,000 or more as determined by the DSC method.

**EP 4 450 543 A1**

## Description

Technical Field

The present invention relates to a thermoplastic resin composition for foam molding. In foam injection molding, the thermoplastic resin composition enables the molding of a molded foam article having a fine foam cell structure and a foam cell size that is uniform in any portion of the molded foam article, which provide excellent mechanical properties of the molded foam article, and also having an excellent surface appearance. The present invention also relates to a molded foam article in which the thermoplastic resin composition for foam molding is used.

Background Art

One known method for injection molding that uses a thermoplastic resin is foam injection molding, in which injection molding is performed with a foaming agent added to a resin material. This method is intended, for example, to reduce the amount of the resin component that is used and achieve a weight reduction. Known foaming agents for use in foam injection molding include thermally decomposable chemical foaming agents, such as azodicarbonamide (Patent Literature 1). Furthermore, physical foaming, which use nitrogen gas, carbon dioxide, or the like as a foaming agent, are also known as an alternative to the chemical foaming. In addition, a method that uses a physical foaming agent in a supercritical state has also been proposed.

Some of the thermoplastic resin compositions for foam molding that have been proposed are as follows.

(1) A thermoplastic resin composition for foam molding (Patent Literature 2) including:

a rubber-reinforced styrenic resin (A) in an amount of 5 to 90 mass%, the rubber-reinforced styrenic resin being derived from polymerization, in the presence of a rubbery polymer (a), of an aromatic vinyl compound or of an aromatic vinyl compound with another vinyl monomer (b1) copolymerizable with an aromatic vinyl compound, the rubber-reinforced styrenic resin having an amount of solubility in hot cyclohexane of 1 to 99 mass% based on the mass of the rubbery polymer (a);
a styrenic resin (B) in an amount of 0 to 85 mass%, the styrenic resin being derived from polymerization of an aromatic vinyl compound or of an aromatic vinyl compound with another vinyl monomer (b2) copolymerizable with an aromatic vinyl compound;
an aromatic polycarbonate resin (C) in an amount of 10 to 90 mass%; and
a chemical foaming agent (D) in an amount of 0.1 to 5 parts by mass per 100 parts by mass of the total of the components (A) to (C), wherein
the rubbery polymer (a) is present in a ratio of 3 to 50 mass% based on the total mass of the components (A) to (C).

(2) A thermoplastic resin composition for foam molding (Patent Literature 3) including:

a rubber-reinforced styrenic resin (A) in an amount of 5 to 90 mass%, the rubber-reinforced styrenic resin being derived from polymerization, in the presence of a rubbery polymer (a), of an aromatic vinyl compound or of an aromatic vinyl compound with another vinyl monomer (b1) copolymerizable with an aromatic vinyl compound, the rubber-reinforced styrenic resin having an amount of solubility in hot cyclohexane of 1 to 99 mass% based on the mass of the rubbery polymer (a);
a styrenic resin (B) in an amount of 0 to 85 mass%, the styrenic resin being derived from polymerization of an aromatic vinyl compound or of an aromatic vinyl compound with another vinyl monomer (b2) copolymerizable with an aromatic vinyl compound;
an aromatic polycarbonate resin (C) in an amount of 10 to 90 mass%; and
a chemical foaming agent (D) in an amount of 0.1 to 5 parts by mass, talc (E) in an amount of 0.5 to 18 parts by mass, and a fibrous filler (F) in an amount of 0.5 to 25 parts by mass, each per 100 parts by mass of the total of the components (A) to (C), wherein
the rubbery polymer (a) is present in a ratio of 3 to 50 mass% based on the total mass of the components (A) to (C).

Citation List

Patent Literature

PTL 1: JP 2008-133485 A
PTL 2: JP 2010-254833 A
PTL 3: JP 2011-37925 A

Summary of Invention

Technical Problem

Molded foam articles produced by foam injection molding of a thermoplastic resin composition for foam molding are required to have the following properties (i) and (ii):

(i) having a high expansion ratio and having a fine foam cell structure and a foam cell size that is uniform in any portion of the molded foam article, which provide excellent mechanical properties (rigidity, in particular) of the molded foam article, and
(ii) having a good surface appearance without defects such as swirl marks and non-uniform-foam-induced surface irregularities, where the swirl marks are marks resulting from deterioration of a surface quality caused by a transfer of a gas released during foam molding to an unfoamed skin layer formed on a surface of the molded article.

From these standpoints, it is desirable that the thermoplastic resin compositions for foam molding of Patent Literature 2 and 3 be further improved.
An object of the present invention is to provide a thermoplastic resin composition for foam molding and a molded foam article in which the thermoplastic resin composition is used. In foam injection molding, the thermoplastic resin composition enables the molding of a molded foam article having a fine foam cell structure and a foam cell size that is uniform in any portion of the molded foam article, which provide excellent mechanical properties of the molded foam article, and also having an excellent

surface appearance.

Solution to Problem

The present inventors discovered that in instances where a high-molecular-weight tetrafluoroethylene polymer (D) is added to a resin component formed of a rubber-reinforced styrenic resin (A) and an aromatic polycarbonate resin (C) or of a rubber-reinforced styrenic resin (A), a styrenic resin (B), and an aromatic polycarbonate resin (C), the release of the foaming gas is inhibited during foam injection molding, so that a stable foam moldability can be exhibited, and, therefore, the above-described problems can be solved.
Specifically, a summary of the present invention is as follows.
[1] A thermoplastic resin composition for foam molding comprising:

a component (A), listed below, in an amount of 1 to 20 parts by mass;
a component (B), listed below, in an amount of 0 to 50 parts by mass;
a component (C), listed below, in an amount of 40 to 90 parts by mass; and
a component (D), listed below,
wherein a total of the components (A) to (C) is 100 parts by mass, and an amount of the component (D) is 0.1 to 5 parts by mass per 100 parts by mass of the total of the components (A) to (C):

component (A): a rubber-reinforced styrenic resin (A) derived from polymerization, in the presence of a rubbery polymer (a), of a vinyl monomer (b1), the vinyl monomer (b1) being an aromatic vinyl compound or an aromatic vinyl compound and another vinyl monomer copolymerizable with the aromatic vinyl compound;
component (B): a styrenic resin (B) derived from polymerization a vinyl monomer (b2), the vinyl monomer (b2) being an aromatic vinyl compound or an aromatic vinyl compound and another vinyl monomer copolymerizable with the aromatic vinyl compound; and
component (C): an aromatic polycarbonate resin (C); and
component (D):a tetrafluoroethylene polymer (D) having a number average molecular weight of 100,000 or more as determined by the DSC method.

[2] The thermoplastic resin composition for foam molding according to [1], further comprising a chemical foaming agent (E) in an amount of 0.1 to 5 parts by mass per 100 parts by mass of the total of the components (A) to (C).

[3] The thermoplastic resin composition for foam molding according to any one of [1] or [2], further comprising an inorganic filler (F) in an amount of 0.1 to 20 parts by mass per 100 parts by mass of the total of the components (A) to (C).

[4] The thermoplastic resin composition for foam molding according to any one of [1] to [3], for use in core-back foam injection molding.

[5] A molded foam article derived from molding of the thermoplastic resin composition for foam molding according to any one of [1] to [4].

[6] A molded foam article derived from core-back foam injection molding of the thermoplastic resin composition for foam molding according to any one of [1] to [4]. Advantageous Effects of Invention

With the thermoplastic resin composition for foam molding of the present invention, it is possible to provide, by foam injection molding, a molded foam article having a fine foam cell structure and a foam cell size that is uniform in any portion of the molded foam article, which provide excellent mechanical properties of the molded foam article, and also having an excellent surface appearance. Description of Embodiments

Embodiments of the present invention will be described in detail below.

[Thermoplastic Resin Composition for Foam Molding]

A thermoplastic resin composition for foam molding of the present invention includes

a component (A), listed below, in an amount of 1 to 20 parts by mass;
a component (B), listed below, in an amount of 0 to 50 parts by mass;
a component (C), listed below, in an amount of 40 to 90 parts by mass; and
a component (D), listed below,
wherein a total of the components (A) to (C) is 100 parts by mass, and an amount of the component (D) is 0.1 to 5 parts by mass per 100 parts by mass of the total of the components (A) to (C):

component (A): a rubber-reinforced styrenic resin (A) derived from polymerization, in the presence of a rubbery polymer (a), of a vinyl monomer (b1), the vinyl monomer (b1) being an aromatic vinyl compound or an aromatic vinyl compound and another vinyl monomer copolymerizable with the aromatic vinyl compound;
component (B): a styrenic resin (B) derived from polymerization a vinyl monomer (b2), the vinyl monomer (b2) being an aromatic vinyl compound or an aromatic vinyl compound and another vinyl monomer copolymerizable with the aromatic vinyl compound;
component (C): an aromatic polycarbonate resin (C); and component (D):a tetrafluoroethylene polymer (D) having a number average molecular weight of 100,000 or more as determined by the DSC method.

In the present invention, "(co)polymerization" means "homopolymerization and copolymerization"; "(meth)acrylate" means "at least one of an acrylate and a methacrylate"; and the same applies to "(meth)acrylic acid".

The thermoplastic resin composition for foam molding of the present invention may be abbreviated simply as a "thermoplastic resin composition".

[Component (A): Rubber-Reinforced Styrenic Resin (A)]

The component (A) is a rubber-reinforced styrenic resin (A) derived from polymerization, in the presence of a rubbery polymer (a), of a vinyl monomer (b1), the vinyl monomer (b1) being an aromatic vinyl compound or an aromatic vinyl compound and another vinyl monomer copolymerizable with the aromatic vinyl compound.

Examples of the rubbery polymer (a) include conjugated diene-based rubbers, such as polybutadiene, polyisoprene, butadiene-styrene copolymers, and butadiene-acrylonitrile copolymers; olefinic rubbers, such as ethylene-propylene copolymers, ethylene-propylene-non-conjugated diene copolymers, ethylene-butene-1 copolymers, and ethylene-butene-1-non-conjugated diene copolymers; acrylic rubbers; silicone rubbers; polyurethane-based rubbers; silicone-acrylic IPN rubbers; natural rubbers; conjugated diene-based block copolymers; and hydrogenated conjugated diene-based block copolymers.

The olefinic rubbers are not particularly limited, and examples thereof include ethylene-$\alpha$-olefin-based rubbers containing ethylene and an $\alpha$-olefin having 3 or more carbon atoms. A content of the ethylene is preferably 5 to 95 mass%, more preferably 50 to 90 mass%, and even more preferably 60 to 88 mass%, relative to a total mass of the monomers that form the ethylene-$\alpha$-olefin-based rubber taken as 100 mass%.

Examples of the $\alpha$-olefin having 3 or more carbon atoms include propylene, 1-butene, 2-butene, isobutene, 1-pentene, 2-methyl-1-butene, 2-methyl-2-butene, 3-methylbutene, 1-hexene, 4-methyl-1-pentene, 3-methyl-1-pentene, 1-heptene, 1-octene, 1-decene, and 1-undecene.

These $\alpha$-olefins may be present alone or in a combination of two or more.

Among these $\alpha$-olefins, propylene and 1-butene are preferable.

A content of the $\alpha$-olefin is preferably 95 to 5 mass%, more preferably 50 to 10 mass%, and particularly preferably 40 to 12 mass%, relative to the total mass of the monomers that form the ethylene-$\alpha$-olefin-based rubber taken as 100 mass%.

The ethylene-$\alpha$-olefin-based rubber may be a binary copolymer formed of ethylene and an $\alpha$-olefin. The ethylene-$\alpha$-olefin-based rubber may be a polymer formed of ethylene, an $\alpha$-olefin and one or more other compounds (e.g., a ternary copolymer or a quaternary copolymer). Examples of the one or more other compounds include non-conjugated diene compounds.

Examples of non-conjugated diene compounds that can be used in the olefinic rubbers include alkenyl norbornenes, cyclic dienes, and aliphatic dienes. Dicyclopentadiene and 5-ethylidene-2-norbornene are preferable.

These non-conjugated diene compounds may be used alone or in a combination of two or more.

A content of the non-conjugated diene compound unit in the ethylene-$\alpha$-olefin-based rubber is typically less than 30 mass% and preferably less than 15 mass%.

The acrylic rubbers are not particularly limited, and preferred examples thereof include (co)polymers of a (meth)acrylic acid alkyl ester compound in which the alkyl group has 1 to 8 carbon atoms and further include copolymers of the (meth)acrylic acid alkyl ester compound and a vinylic monomer copolymerizable with the (meth)acrylic acid alkyl ester compound.

Specific examples of acrylic acid alkyl ester compounds in which the alkyl group has 1 to 8 carbon atoms include methyl acrylate, ethyl acrylate, propyl acrylate, n-butyl acrylate, i-butyl acrylate, amyl acrylate, hexyl acrylate, n-octyl acrylate, 2-ethylhexyl acrylate, and cyclohexyl acrylate.

Specific examples of methacrylic acid alkyl ester compounds in which the alkyl group has 1 to 8 carbon atoms include methyl methacrylate, ethyl methacrylate, propyl methacrylate, n-butyl methacrylate, i-butyl methacrylate, amyl methacrylate, hexyl methacrylate, n-octyl methacrylate, 2-ethylhexyl methacrylate, and cyclohexyl methacrylate.

Among these compounds, n-butyl acrylate and 2-ethylhexyl acrylate are preferable.

These may be used alone or in a combination of two or more.

Examples of the vinylic monomer copolymerizable with the (meth)acrylic acid alkyl ester compound include polyfunctional vinyl compounds, aromatic vinyl compounds, and vinyl cyanide compounds.

The polyfunctional vinyl compounds are monomers having two or more vinyl groups per molecule of the monomer. The polyfunctional vinyl compounds have a function of crosslinking a (meth)acrylic rubber and serve as a reaction initiation site for graft polymerization.

Specific examples of polyfunctional vinyl monomers include polyfunctional aromatic vinyl compounds, such as divinylbenzene and divinyltoluene; (meth)acrylic acid esters of a polyhydric alcohol, such as (poly)ethylene glycol dimethacrylate and trimethylolpropane triacrylate; diallyl maleate, diallyl fumarate, triallyl cyanurate, triallyl cyanurate, diallyl phthalate, and allyl methacrylate.

These polyfunctional vinyl compounds may be used alone or in a combination of two or more.

The aromatic vinyl compounds and the vinyl cyanide compounds may be any of the compounds mentioned later.

Examples of other copolymerizable monomers include acrylamides, methacrylamides, vinylidene chloride, alkyl vinyl ethers in which the alkyl group has 1 to 6 carbon atoms, (meth)acrylic acid alkyl esters in which the alkyl group has 9 or more carbon atoms, and (meth)acrylic acids.

These are used alone or in a combination of two or more.

A preferred monomer composition of the acrylic rubber is as follows: a (meth)acrylic acid alkyl ester compound unit in which the alkyl group has 1 to 8 carbon atoms is present in an amount of 80 to 99.99 mass% or more preferably 90 to 99.95 mass%, a polyfunctional vinyl compound unit is present in an amount of 0.01 to 5 mass% or more preferably 0.05 to 2.5 mass%, and a different vinyl monomer unit copolymerizable with this is present in an amount of 0 to 20 mass% or more preferably 0 to 10 mass%. The total percentage of the monomer composition is 100 mass%.

As will be described later, it is preferable that the rubber-reinforced styrenic resin (A) have an amount of solubility in hot cyclohexane of 1 to 99 mass% based on the mass of the rubbery polymer (a). For the production of the acrylic rubber, in instances where a polyfunctional vinyl compound is used to enable the rubber-reinforced styrenic resin (A) to have the amount of solubility in hot cyclohexane of greater than or equal to 1 mass% based on the mass of the rubbery polymer (a), it is preferable that the polyfunctional vinyl compound be used in a later stage of the polymerization. That is, the acrylic rubber can be produced by a method in which, in an early stage of the polymerization, a (meth)acrylic acid alkyl ester compound, if necessary together with another copolymerizable vinyl monomer (b1), is polymerized; and in a later stage of the polymerization, the (meth)acrylic acid alkyl ester compound and a polyfunctional vinyl compound, if necessary together with another copolymerizable vinyl monomer (b1), are polymerized.

Examples of methods for producing the acrylic rubber of the present invention include methods (1) to (4), listed below.

(1) A method in which different vinyl monomers are collectively added and polymerized.
(2) A method in which one or more specified vinyl monomers are collectively added and polymerized, and the remaining one or more vinyl monomers are added and polymerized in a later stage of the polymerization.
(3) A method in which some of different vinyl monomers are added and polymerized, and the remaining one or more vinyl monomers are continuously added and polymerized.
(4) A method in which different vinyl monomers are polymerized in two or more stages.

The method (4) is preferable. More preferably, the method (4) may be a method in which a polyfunctional vinyl compound is used in a later stage, that is, in a second or subsequent stage.

Regarding the method for polymerization, emulsion polymerization is particularly preferable.

A volume average particle diameter of the acrylic rubber is preferably 50 to 1,000 nm, more preferably 40 to 700 nm, and particularly preferably 50 to 500 nm.

Specific examples of the conjugated diene-based block copolymer include copolymers including at least one of block A or block C and including at least one of block B or block A/B; and polymers of block B or block A/B. These blocks are described below. These can be produced with an anionic polymerization method known in the art. Examples of the method include the methods disclosed in JP 47-28915 B, JP 47-3252 B, JP 48-2423 B, and JP 48-20038 B.

Examples of specific structures of the conjugated diene-based block copolymer are listed below. Each of the blocks is defined as follows.

A: aromatic vinyl compound polymer block
B: conjugated diene polymer block
A/B: aromatic vinyl compound/conjugated diene random copolymer block
C: tapered block formed of a copolymer of a conjugated diene and an aromatic vinyl compound, with an amount of the aromatic vinyl compound gradually increasing

$$A\text{-}B \qquad (1)$$
$$A\text{-}B\text{-}A \qquad (2)$$
$$A\text{-}B\text{-}C \qquad (3)$$
$$A\text{-}B_1\text{-}B_2 \qquad (4)$$

(Here, $B_1$ is a conjugated diene polymer block or a conjugated diene-aromatic vinyl compound copolymer block, with the conjugated diene portion preferably having a vinyl bond content of greater than or equal to 20%. $B_2$ is a conjugated diene polymer block or a conjugated diene-aromatic vinyl compound copolymer block, with the conjugated diene portion preferably having a vinyl bond content of less than 20%).

$$A\text{-}A/B \qquad (5)$$
$$A\text{-}A/B\text{-}C \qquad (6)$$
$$A\text{-}A/B\text{-}B \qquad (7)$$
$$A\text{-}A/B\text{-}A \qquad (8)$$
$$B_2\text{-}B_1\text{-}B_2 \qquad (9)$$

(Here, $B_1$ and $B_2$ are as described above).

$$C\text{-}B \qquad (10)$$
$$C\text{-}B\text{-}C \qquad (11)$$
$$C\text{-}A/B\text{-}C \qquad (12)$$
$$C\text{-}A\text{-}B \qquad (13)$$

The specific structure of the conjugated diene-based block copolymer may be a copolymer in which any of these basic backbones is repeatedly present or may be a conjugated diene-based block copolymer obtained by subjecting the copolymer to coupling.

A copolymer having the structure of formula (4) is shown in JP 2-133406 A. Copolymers having the structure of formula (5) or the structure of formula (6) are shown in JP 2-305814 A and JP 3-72512 A.

Examples of the conjugated diene to be used include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, and chloroprene. The conjugated diene may be 1,3-butadiene, isoprene, or 1,3-pentadiene. This is preferable in terms of industrial availability and for obtaining a conjugated diene-based block copolymer having excellent physical properties. More preferably, the conjugated diene is 1,3-butadiene.

Examples of the aromatic vinyl compound to be used include styrene, t-butylstyrene, $\alpha$-methylstyrene, p-methylstyrene, hydroxystyrene, vinylxylene, monochlorostyrene, dichlorostyrene, monobromostyrene, dibromostyrene, fluorostyrene, p-t-butylstyrene, ethylstyrene, vinyl naphthalene, divinylbenzene, 1,1-diphenylstyrene, N,N-diethyl-p-aminoethylstyrene, N,N-diethyl-p-aminoethylstyrene, and vinylpyridine. Preferably, the aromatic vinyl compound is styrene or $\alpha$-methylstyrene, and particularly preferably, styrene.

In the conjugated diene-based block copolymer, a ratio of the aromatic vinyl compound/the conjugated diene, on a mass basis, may be 0 to 70/100 to 30. The ratio is preferably 0 to 60/100 to 40 and more preferably 0 to 50/100 to 50. In instances where the aromatic vinyl compound is used as an essential component, the ratio of the aromatic vinyl compound/the conjugated diene is preferably 10 to 70/90 to 30. When the content of the aromatic vinyl compound is greater than 70 mass%, the copolymer is in the form of a resin. As a result, the effect thereof as the rubber component is poor, and, therefore, such a content is not preferable.

In the conjugated diene block, the vinyl bond content of the conjugated diene portion is typically within a range of 5 to 80%.

A number average molecular weight of the conjugated diene-based block copolymer is typically 10,000 to 1,000,000, preferably 20,000 to 500,000, and more preferably 20,000 to 200,000.

In the above structural formulae, it is preferable that a number average molecular weight of the A portion be within a range of 3,000 to 150,000, and a number average molecular weight of the B portion be within a range of 5,000 to 200,000.

The number average molecular weights are values measured by gel permeation chromatography (GPC).

The vinyl bond content of the conjugated diene compound can be adjusted with one or more substances, examples of which include amines, such as N,N,N',N'-tetramethylethylenediamine, trimethylamine, triethylamine, and diazocyclo(2,2,2)octaamine; ethers, such as tetrahydrofuran, diethylene glycol dimethyl ether, and diethylene glycol dibutyl ether; thioethers; phosphines; phosphoamides; alkyl benzene sulfonic acid salts; and alkoxides of potassium or sodium.

Examples of the coupling agent that is used in the present invention include diethyl adipate, divinylbenzene, methyldichlorosilane, silicon tetrachloride, butyltrichlorosilicon, tetrachlorotin, butyltrichlorotin, dimethylchlorosilicon, tetrachlorogermanium, 1,2-dibromoethane, 1,4-chloromethylbenzene, bis(trichlorosilyl)ethane, epoxidized linseed oils, tolylene diisocyanates, and 1,2,4-benzene triisocyanate.

The hydrogenated conjugated diene-based block copolymer is a hydrogenated product that is a partially hydrogenated product or a completely hydrogenated product of the conjugated diene-based block copolymer, in which at least 30%, or preferably at least 50%, of the carbon-to-carbon double bonds of the conjugated diene portion is hydrogenated, or more preferably at least 90% thereof is hydrogenated.

The hydrogenation reaction of the conjugated diene-based block copolymer can be carried out with a method known in the art. By adjusting the degree of hydrogenation with a method known in the art, a target hydrogenated conjugated diene-based block copolymer can be obtained. Specific examples of the method include the methods disclosed in JP 42-8704 B, JP 43-6636 B, JP 63-4841 B, JP 63-5401 B, JP 2-133406 A, and JP 1-297413 A.

The rubbery polymer (a) used in the present invention may have a gel content of less than or equal to 70 mass%. This is preferable from the standpoint of foamability of a thermoplastic resin composition for foam molding. The gel content of the rubbery polymer (a) is more preferably less than or equal to 50 mass% and even more preferably less than or equal to 10 mass%.

The gel content can be determined according to the method described below.

1 g of the rubbery polymer (a) is added to 100 ml of toluene, which is then allowed to stand at room temperature for 48 hours. Subsequently, a toluene-insoluble residue is filtered off with a 100-mesh wire sieve (a mass of the wire sieve is designated as W1 grams), and then, the toluene-insoluble residue and the wire sieve are dried under vacuum at a temperature of 80°C for 6 hours and thereafter weighed (the mass is designated as W2 grams). W1 and W2 are substituted into equation (14) below to determine the gel content. Some ethylene-propylene-based rubbery polymers have ethylene crystallinity, and in instances where such a rubbery polymer is used, the rubbery polymer is to be dissolved at a temperature of 80°C so that the gel content can be determined.

$$\text{Gel content} = [[W2\ (g) - W1\ (g)]/1\ (g)] \times 100 \qquad (14)$$

The gel content can be adjusted by appropriately specifying a type and an amount of use of a crosslinkable monomer, a type and an amount of use of a molecular weight regulator, a polymerization time, a polymerization temperature, a polymerization conversion ratio, and the like, for the production of the rubbery polymer (a).

Preferably, the rubbery polymer (a) used in the present invention is polybutadiene, a butadiene-styrene copolymer, an ethylene-propylene copolymer, an ethylene-propylene-non-conjugated diene copolymer, an acrylic rubber, a silicone rubber, a conjugated diene-based block copolymer, or a hydrogenated conjugated diene-based block copolymer. More preferably, the rubbery polymer (a) is an ethylene-propylene copolymer, an ethylene-propylene-non-conjugated diene copolymer, an acrylic rubber, a conjugated diene-based block copolymer, or a hydrogenated conjugated diene-based block copolymer. Particularly preferably, the rubbery polymer (a) is an acrylic rubber, an ethylene-propylene copolymer, an ethylene-propylene-non-conjugated diene copolymer, a conjugated diene-based block copolymer, or a hydrogenated conjugated diene-based block copolymer. Most preferably, the rubbery polymer (a) is an acrylic rubber having a gel content of less than or equal to 10 mass% and a volume average particle diameter of 50 to 500 nm, in particular, 50 to 300 nm.

The rubbery polymer (a) can be produced with a method known in the art, examples of which include emulsion polymerization, solution polymerization, bulk polymerization, and suspension polymerization. Regarding acrylic rubbers, those produced by emulsion polymerization, among these methods, are preferable. Regarding ethylene-propylene copolymers, ethylene-propylene-non-conjugated diene copolymers, conjugated diene-based block copolymers, and hydrogenated conjugated diene-based block copolymers, those produced by solution polymerization are preferable. Regarding polybutadiene and butadiene-styrene copolymers, those produced by solution polymerization are preferable.

The component (A) can be obtained by polymerizing a vinyl monomer (b1), the vinyl monomer being an aromatic vinyl compound or an aromatic vinyl compound and another vinyl monomer copolymerizable with the aromatic vinyl compound, in the presence of the rubbery polymer (a). That is, one or more vinyl monomers (b1) may be an aromatic vinyl compound alone or a mixture of an aromatic vinyl compound and another vinyl monomer copolymerizable with the aromatic vinyl compound.

It is preferable that the component (A) be one obtained by polymerizing a vinyl monomer (b1), the vinyl monomer being an aromatic vinyl compound or an aromatic vinyl compound and another vinyl monomer copolymerizable with the aromatic vinyl compound, in the presence of the rubbery polymer (a), wherein an amount of the vinyl monomer (b1) is 80 to 30 parts by mass, and an amount of the rubbery polymer (a) is 20 to 70 parts by mass. (Here, the sum of the mass of the rubbery polymer (a) and the mass of the one or more vinyl monomers (b1) is 100 parts by mass.) More preferably, the mass of the rubbery polymer (a) is 30 to 60 parts by mass, and the mass of the one or more vinyl monomers (b1) is 70 to 40 parts by mass.

Examples of the aromatic vinyl compound to be used include all the compounds mentioned above for the rubbery polymer (a). Particularly preferably, the aromatic vinyl compound is styrene or α-methylstyrene. These may be used alone or in a combination of two or more.

Examples of the different vinyl monomer copolymerizable with the aromatic vinyl compound include vinyl cyanide compounds, (meth)acrylic acid ester compounds, maleimide compounds, and other unsaturated compounds containing one or more functional groups. Examples of the other unsaturated compounds containing one or more functional groups include unsaturated acid compounds, epoxy-group-containing unsaturated compounds, hydroxy-group-containing unsaturated compounds, acid-anhydride-group-containing unsaturated compounds, oxazoline-group-containing unsaturated compounds, and substituted or unsubstituted amino-group-containing unsaturated compounds.

These different vinyl monomers may be used alone or in a combination of two or more.

Examples of the vinyl cyanide compounds include acrylonitriles and methacrylonitriles.

These may be used alone or in a combination of two or more. In the instance where a vinyl cyanide compound is used, chemical resistance is imparted.

An amount of use of the vinyl cyanide compound is typically 0 to 60 mass% and preferably 5 to 50 mass%, relative to a total mass of the one or more vinyl monomers (b1).

Examples of the (meth)acrylic acid ester compounds include methyl acrylate, ethyl acrylate, butyl acrylate, methyl methacrylate, ethyl methacrylate, and butyl methacrylate.

These may be used alone or in a combination of two or more.

In the instance where a (meth)acrylic acid ester compound is used, surface hardness is improved. An amount of use of the (meth)acrylic acid ester compound is typically 0 to 80 mass% relative to the total mass of the one or more vinyl monomers (b1).

Examples of maleimide compounds include N-arylmaleimides such as N-phenylmaleimide, N-(2-methylphenyl)maleimide, N-(4-hydroxyphenyl)maleimide, N-chlorophenylmaleimide, and the like, and N-cycloalkylmaleimides such as N-cyclohexylmaleimide, and the like.

These may be used alone or in a combination of two or more.

The introduction of the maleimide unit may be carried out by copolymerizing a maleic anhydride and subsequently performing imidization. In the instance where a maleimide compound is used, heat resistance is imparted.

An amount of use of the maleimide compound is typically 1 to 60 mass% relative to the total mass of the one or more vinyl monomers (b1).

Examples of the unsaturated acid compounds include acrylic acid, methacrylic acid, ethacrylic acid, maleic acid, fumaric acid, itaconic acid, crotonic acid, and cinnamic acid.

These may be used alone or in a combination of two or more.

Examples of the epoxy-group-containing unsaturated compounds include glycidyl acrylate, glycidyl methacrylate, and allyl glycidyl ether.

These may be used alone or in a combination of two or more.

Examples of the hydroxy-group-containing unsaturated compounds include 3-hydroxy-1-propene, 4-hydroxy-1-butene, cis-4-hydroxy-2-butene, trans-4-hydroxy-2-butene, 3-hydroxy-3-methyl-1-propene, 2-hydroxyethyl methacrylate, 2-hydroxyethyl acrylate, and N-(4-hydroxyphenyl)maleimide. These may be used alone or in a combination of two or more.

Examples of the oxazoline-group-containing unsaturated compounds include vinyl oxazoline. These may be used alone or in a combination of two or more.

Examples of the acid-anhydride-group-containing unsaturated compounds include maleic anhydride, itaconic anhydride, and citraconic anhydride.

These may be used alone or in a combination of two or more.

Examples of the substituted or unsubstituted amino-group-containing unsaturated compounds include aminoethyl acrylate, propylaminoethyl acrylate, dimethylaminoethyl methacrylate, phenylaminoethyl methacrylate, N-vinyl diethylamine, N-acetyl vinylamine, acrylamine, N-methylacrylamine, acrylamide, N-methylacrylamide, and p-aminostyrene.

These may be used alone or in a combination of two or more.

In instances where one or more other unsaturated compounds containing one or more functional groups are used, one possibility is that, for the blending of the rubber-reinforced styrenic resin (A) with the styrenic resin (B) and the aromatic polycarbonate resin (C), compatibility between these may be improved. An amount of use of the other unsaturated compounds containing one or more functional groups is typically 0.1 to 20 mass% and preferably 0.1 to 10 mass%, relative to a total mass of the component (A) and the component (B). The amount of use is the total amount of unsaturated compounds containing a functional group that are used.

In the one or more vinyl monomers (b1), an amount of one or more monomers other than the aromatic vinyl compound is typically less than or equal to 80 mass%, preferably less than or equal to 60 mass%, and even more preferably less than or equal to 50 mass%, relative to the total mass of the one or more vinyl monomers (b1) taken as 100 mass%.

Examples of preferred combinations of monomers that form the one or more vinyl monomers (b1) include styrene alone, styrene/acrylonitrile, styrene/methyl methacrylate, styrene/acrylonitrile/methyl methacrylate, styrene/acrylonitrile/glycidyl methacrylate, styrene/acrylonitrile/2-hydroxyethyl methacrylate, styrene/acrylonitrile/(meth)acrylate, styrene/N-phenylmaleimide, and styrene/methyl methacrylate/cyclohexylmaleimide. Further preferred combinations are styrene alone, styrene/acrylonitrile (=65/45 to 90/10 (mass ratio)), styrene/methyl methacrylate (=80/20 to 20/80 (mass ratio)), and styrene/acrylonitrile/methyl methacrylate (where the styrene content is any amount within a range of 20 to 80 mass%, and a total content of acrylonitrile and methyl methacrylate is any amount within a range of 20 to 80 mass%).

The rubber-reinforced styrenic resin (A) can be produced with a polymerization method known in the art, examples of which include emulsion polymerization, bulk polymerization, solution polymerization, suspension polymerization, and combinations of any of these. Regarding the polymerization method, in instances where the rubbery polymer (a) is derived from emulsion polymerization, the production of the component (A) may also be carried out by emulsion polymerization. In instances where the rubbery polymer (a) is derived from solution polymerization, the production of the component (A) is typically and preferably carried out by bulk polymerization, solution polymerization, or suspension polymerization. Even in instances where the rubbery polymer (a) is produced by solution polymerization, the production of the component (A) can be carried out by emulsion polymerization, which can be performed by emulsifying the rubbery polymer (a) by using a method known in the art. Even in instances where the rubbery polymer (a) is produced by emulsion polymerization, the production of the component (A) can be carried out by bulk polymerization, solution polymerization, or suspension polymerization, which can be performed after the rubbery polymer (a) is coagulated and isolated.

In instances where emulsion polymerization is used for the production, any of the following is used: a polymerization initiator, a chain transfer agent, an emulsifying agent, and the like. All of these may be ones known in the art.

Examples of the polymerization initiator include cumene hydroperoxide, p-menthane hydroperoxide, diisopropylbenzene hydroperoxide, tetramethylbutyl hydroperoxide, tert-butyl hydroperoxide, potassium persulfate, and azobisisobutyronitrile. It is preferable to use a redox system as an auxiliary polymerization initiator, and the redox system may include those that use any of various types of reduction agents, saccharated iron pyrophosphate, sulfoxylate, and the like.

Examples of the chain transfer agent include octyl mercaptans, n-dodecyl mercaptans, t-dodecyl mercaptans, n-hexyl mercaptans, and terpinolenes.

Examples of the emulsifying agent that may be used include alkyl benzene sulfonic acid salts, such as sodium dodecylbenzene sulfonate; aliphatic sulfonic acid salts, such as sodium lauryl sulfate; higher fatty acid salts, such as potassium laurate, potassium stearate, potassium oleate, and potassium palmitate; and rosin acid salts, such as potassium rosinate.

In the emulsion polymerization, the manner of using the rubbery polymer (a) and the one or more vinyl monomers (b1) may be as follows. In the presence of the total amount of the rubbery polymer (a), the one or more vinyl monomers (b1) may be added at one time for polymerization or added in portions or continuously for polymerization. It is also possible to add a portion of the rubbery polymer (a) during the polymerization.

After the emulsion polymerization, the obtained latex is typically coagulated with a coagulating agent. Subsequently, the resultant is washed with water and dried to give a powder of the component (A). In this instance, the coagulation may be performed after two or more types of latices of the component (A) obtained in the emulsion polymerization are appropriately blended together. The coagulation may be performed after a latex of the component (B) is appropriately blended.

Examples of the coagulating agent that may be used include inorganic salts, such as calcium chloride, magnesium sulfate, and magnesium chloride; and acids, such as sulfuric acid, acetic acid, citric acid, and malic acid.

It is also possible to obtain a powder of the component (A) by atomizing and drying the latex.

In instances where the component (A) is produced by solution polymerization, solvents that may be used are inert polymerization solvents that are used in typical radical polymerization. Examples of the solvent include aromatic hydrocarbons, such as ethyl benzene and toluene; ketones, such as methyl ethyl ketone and acetone; acetonitrile; dimethylformamide; and N-methylpyrrolidone.

The polymerization temperature is typically within a range of 80 to 140°C and preferably 85 to 120°C. For the polymerization, a polymerization initiator may be used, or the polymerization may be carried out by thermal polymerization without using a polymerization initiator.

Suitable examples of polymerization initiators that may be used include organic peroxides, such as ketone peroxides, dialkyl peroxides, diacyl peroxides, peroxyesters, hydroperoxides, azobisisobutyronitrile, and benzoyl peroxide.

In instances where a chain transfer agent is used, examples of chain transfer agents that may be used include mercaptans, terpinolenes, and $\alpha$-methylstyrene dimers.

In instances where the component (A) is produced by bulk polymerization or suspension polymerization, any of the polymerization initiators, chain transfer agents, and the like described above for the solution polymerization may be used.

An amount of residual monomers in the component (A) produced by any of the above-mentioned polymerization methods is typically less than or equal to 10,000 ppm and preferably less than or equal to 5,000 ppm.

The component (A), which is obtained by polymerizing the one or more vinyl monomers (b1) in the presence of the rubbery polymer (a), includes a copolymer in which the one or more vinyl monomers (b1) is graft-copolymerized with the rubbery polymer (a) and includes a non-grafted component (a (co)polymer of the one or more vinyl monomers (b1)) in which the one or more vinyl monomers (b1) is not grafted with the rubbery polymer (a).

Typically, the rubber-reinforced styrenic resin (A) has a grafting ratio adjusted to be 5 to 100 mass%. The grafting ratio is preferably 10 to 90 mass%, more preferably 15 to 85 mass%, and particularly preferably 20 to 80%. The grafting ratio can be varied by varying one or more factors, examples of which include the type and the amount of use of the polymerization initiator, the type and the amount of use of the chain transfer agent, the polymerization method, the time of contact between the one or more vinyl monomers (b1) and the rubbery polymer (a) during polymerization, the type of the rubbery polymer (a), and the polymerization temperature. In general, as a graft ratio increases, an amount of a soluble component that dissolves in hot cyclohexane from the component (A) decreases. When the soluble component is disappeared, the foamability of the thermoplastic resin composition of the present invention deteriorates.

The grafting ratio can be determined according to equation (15) below.

$$\text{Grafting ratio (mass\%)} = \{(T-S)/S\} \times 100 \quad (15)$$

In the above equation (15), T is a mass (g) of an insoluble fraction resulting from an operation performed as follows: 1 g of the rubber-reinforced styrenic resin (A) is added to 20 ml of acetone, the resultant is shaken with a shaker for 2 hours, and subsequently, the resultant is centrifuged with a centrifuge (rotational speed: 23,000 rpm) for 60 minutes to separate a soluble fraction from the insoluble fraction.

S is a mass (g) of the rubbery polymer (a) present in 1 g of the rubber-reinforced styrenic resin (A).

In instances where an aromatic vinyl compound alone is used as the one or more vinyl monomers (b1), methyl ethyl ketone is to be used instead of acetone for the measurement.

Typically, the acetone-soluble fraction of the rubber-reinforced styrenic resin (A) has an intrinsic viscosity [$\eta$] (measured at 30°C in methyl ethyl ketone used as a solvent) of 0.15 to 1.2 dl/g. The intrinsic viscosity is preferably 0.2 to 1.0 dl/g and more preferably 0.2 to 0.8 dl/g.

Typically, the particles of the grafted rubbery polymer dispersed in the rubber-reinforced styrenic resin (A) have an average particle diameter of 50 to 3,000 nm. The average particle diameter is preferably 40 to 2,5000 nm and particularly preferably 50 to 2,000 nm. When the rubber particle diameter is less than 50 nm, it is likely that impact resistance is degraded. When the rubber particle diameter is greater than 3,000 nm, it is likely that the surface appearances of molded articles are degraded.

The component (A) can be prepared to have a transparency. This can be achieved by ensuring that the rubbery polymer (a) and the copolymer of the one or more vinyl monomers (b1) have a substantially equal refractive index and/or ensuring that the particle diameter of the rubbery polymer (a) that is dispersed is substantially less than or equal to a wavelength of visible light (typically less than or equal to 1,500 nm). Such a transparent resin may also be used as the component (A) of the present invention.

One component (A) may be used alone, or two or more components (A) that are different in the copolymer composition, physical properties, and/or the like may be mixed together and used.

[component (B) : Styrenic Resin (B)]

The component (B) is a (co)polymer prepared by polymerizing a vinyl monomer (b2), the vinyl monomer being an aromatic vinyl compound or an aromatic vinyl compound and another vinyl monomer copolymerizable with the aromatic vinyl compound. One or more vinyl monomers (b2) may be an aromatic vinyl compound alone or a mixture of an aromatic vinyl compound and another vinyl monomer copolymerizable with the aromatic vinyl compound. Examples of the aromatic vinyl compound and the different vinyl monomer copolymerizable with the aromatic vinyl compound that are to be used include all the compounds mentioned above for the component (A).

The one or more vinyl monomers (a2) may be the same as or different from the one or more vinyl monomers (b1) described above.

In the one or more vinyl monomers (b2), a content of one or more monomers other than the aromatic vinyl compound is typically less than or equal to 80 mass%, preferably less than or equal to 60 mass%, and even more preferably less than or equal to 50 mass%, relative to a total mass of the one or more vinyl monomers (b2) taken as 100 mass%.

Preferred examples of the component (B) include homopolymers of styrene, styrene-acrylonitrile copolymers, styrene-methyl methacrylate copolymers, styrene-acrylonitrile-methyl methacrylate copolymers, styrene-maleimide compound copolymers, and copolymers of any of the foregoing compounds and any of the functional-group-containing unsaturated compounds mentioned above.

The component (B) can be produced with any of the polymerization methods known in the art, which include emulsion polymerization, bulk polymerization, solution polymerization, suspension polymerization, and a combination of any of these, as described above for the production method for the component (A).

The weight average molecular weight of the styrenic resin (B) is usually 40,000 to 300,000, preferably 60,000 to 150,000. When the weight average molecular weight of the styrenic resin (B) is within the above range, mechanical strength and moldability are further improved.

The weight average molecular weight of the styrenic resin (B) is a value converted to standard polystyrene measured by gel permeation chromatografhy (GPC).

One component (B) may be used alone, or two or more components (B) that are different in the copolymer composition, physical properties, and/or the like may be mixed together and used.

[component (C):Aromatic Polycarbonate Resin (C)]

The aromatic polycarbonate resin (C) may be any of aromatic polycarbonate resins derived from a polymerization method known in the art. Examples of the polymerization method include interfacial polycondensation between a dihydroxy aryl compound and phosgene and transesterification reactions (melt polycondensation) between a dihydroxy aryl compound and a carbonate compound, such as diphenyl carbonate.

Examples of the dihydroxy aryl compound include bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)propane, 2,2-bis(4-hydroxy-3-t-butylphenyl)propane, 2,2-bis(4-hydroxy-3-t-butylphenyl)propane, 1,1-bis(4-hydroxyphenyl)cyclopentane, 1,1-bis(4-hydroxyphenyl)cyclohexane, 4,4'-dihydroxyphenyl ether, 4,4'-dihydroxyphenyl sulfide, 4,4'-dihydroxyphenyl sulfone, 4,4'-dihydroxy-3,3'-dimethyl diphenyl sulfone, hydroquinone, and resorcinol. Further examples include polyorganosiloxanes having hydroxy-aryloxy terminal groups (see U.S. patent No. 3,419,634, for example). These may be used alone or in a combination of two or more. Among these, 2,2-bis(4-hydroxyphenyl propane (bisphenol A) is preferable.

The viscosity average molecular weight of the polycarbonate resin (C) is preferably 12,000 to 40,000, more preferably 15,000 to 35,000, and particularly preferably 18,000 to 30,000. When the molecular weight is high, a molded foam article that is produced has a high mechanical strength, but a decrease in flowability makes it impossible to obtain uniform cells, which tends to degrade the appearance of the molded foam article. The component (C) may be two or more aromatic polycarbonate-based resins (C) having different molecular weights.

Typically, the viscosity average molecular weight of the aromatic polycarbonate-based resin (C) can be calculated as follows. A specific viscosity ($\eta$sp) of the aromatic polycarbonate-based resin (C) is measured at 20°C and a concentration of 0.7 g/100 ml (methylene chloride), with the methylene chloride being used as a solvent, and is substituted into equation (17) below.

$$\text{Viscosity average molecular weight} = ([\eta] \times 8130)^{1.205}$$

$$(17)$$

In the equation, $[\eta] = [(\eta sp \times 1.12 + 1)^{1/2} -1]/0.56C$, where C is the concentration.

The aromatic polycarbonate-based resin (C) prepared by interfacial polycondensation may contain one or more chlorine compounds. The chlorine compounds may adversely affect a durability of the thermoplastic resin composition of the present invention. Accordingly, a chlorine compound content of the aromatic polycarbonate-based resin (C), determined as a chlorine atom content, is typically specified to be less than or equal to 300 ppm and preferably less than or equal to 100 ppm.

[Contents of Components (A) to (C)]

In the thermoplastic resin composition of the present invention, a content of the component (A) is 1 to 20 parts by mass and is preferably 3 to 18 parts by mass and more preferably 5 to 15 parts by mass, per 100 parts by mass of the total of the components (A) to (C).

When the content of the component (A) is less than 1 part by mass, an impact strength is reduced. When the content is greater than 20 parts by mass, moldability is reduced.

In the thermoplastic resin composition of the present invention, a content of the component (B) is 0 to 50 parts by mass and is preferably 0 to 40 parts by mass and more preferably 0 to 30 parts by mass, per 100 parts by mass of the total of the components (A) to (C).

The component (B) is used, as necessary, to impart various functionalities to the thermoplastic resin composition of the present invention, which can be achieved by varying the copolymerization components for the styrenic resin (B), and to improve compatibility with another resin. When the content of the component (B) is greater than 50 parts by mass, foamability is impaired, which results in a poor appearance of a molded foam article that is produced.

In instances where the component (B) is included in a manner such that a content of the rubbery polymer (a) based on the total mass of the component (A) and the component (B) is 3 to 50 mass%, a good balance between the mechanical strength and the flowability is achieved, and, therefore, such instances are preferable.

In the thermoplastic resin composition of the present invention, a content of the component (C) is 40 to 90 parts by mass and is preferably 45 to 85 parts by mass and more preferably 50 to 80 parts by mass, per 100 parts by mass of the total of the components (A) to (C).

When the content of the component (C) is less than 40 parts by mass, it is difficult to produce a molded foam article having a uniform cell diameter. When the content of the component (C) is greater than 90 parts by mass, a molded foam article that is produced has a poor appearance.

[Component (D): Tetrafluoroethylene polymer (D)]

The thermoplastic resin composition of the present invention includes component (D):a tetrafluoroethylene polymer (D) having a number average molecular weight of 100,000 or more as determined by the DSC method in addition to the components (A) to (C). Because of the inclusion of the high-molecular-weight tetrafluoroethylene polymer (D) in a predetermined ratio in the thermoplastic resin composition of the present invention, the object of the present invention is achieved.

Examples of the tetrafluoroethylene polymer (D) include polytetrafluoroethylene polymers, acrylic polymer-modified tetrafluoroethylene polymers, and the like.

The tetrafluoroethylene polymer may be a tetrafluoroethylene homopolymer, a copolymer of tetrafluoroethylene with vinylidene fluoride, hexafluoropropylene, or the like. Preferably, it is a tetrafluoroethylene homopolymer.

The acrylic polymer-modified tetrafluoroethylene polymer is a tetrafluoroethylene polymer modified with an acrylic polymer. Various methods are possible as the modification method.

Examples include the following methods:

a method of blending (meth)acrylic acid ester polymer and polytetrafluoroethylene polymer;

a method of polymerizing a (meth)acrylic acid ester monomer in the presence of an aqueous dispersion of polytetrafluoroethylene particles; and

a method of polymerizing a monomer having an ethylenically unsaturated bond in a mixture of an aqueous dispersion of polytetrafluoroethylene particles and an aqueous dispersion of a (meth)acrylic acid ester polymer.

As the acrylic polymer-modified tetrafluoroethylene polymer, commercially available ones can be used. Examples of commercially available product include Metablane A3000 manufactured by Mitsubishi Chemical Corporation, and the like.

The molecular weight of the tetrafluoroethylene polymer (D) is 100,000 or more as measured by a differential scanning calorimeter (DSC). When the molecular weight of the tetrafluoroethylene polymer is 100,000 or more, it is possible to effectively improve the appearance of molded foam articles and make the foam cells fine and uniform. From these viewpoints, the molecular weight of the tetrafluoroethylene polymer (D) is preferably 200,000 or more, and more preferably 300,000 or more. On the other hand, when the molecular weight of the tetrafluoroethylene polymer (D) is too large, the thermoplastic resin composition of the present invention will be non-uniform. From this viewpoint, the molecular weight of the tetrafluoroethylene polymer (D) is preferably 20,000,000 or less, and more preferably 15,000,000 or less.

The measurement by the DSC method and the method for calculating the number average molecular weight are as described in the Examples section below.

In the thermoplastic resin composition of the present invention, the content of the component (D) is 0.1 to 5 parts by mass, preferably 0.3 to 4 parts by mass, and more preferably 0.5 to 3 parts by mass, based on 100 parts by mass of the total of components (A) to (C).

When the content of the component (D) is less than 0.1 part by mass, the effects of the present invention cannot be sufficiently obtained by blending the component (D). When the content of the component (D) exceeds 5 parts by mass, the moldability will decrease and the appearance of the resulting molded articles will be impaired.

In the thermoplastic resin composition of the present invention, only one component (D) may be used, or two or more components having different copolymer compositions, physical properties, etc. may be blended.

[Component (E): Chemical Foaming Agent (E)]

Preferably, the thermoplastic resin composition of the present invention further includes a chemical foaming agent (E) (which may hereinafter also be referred to as a "component (E)").

The chemical foaming agent (E) is not particularly limited and is preferably not an amine-based foaming agent. This is because the thermoplastic resin composition of the present invention includes an aromatic polycarbonate-based resin (C), and an amine-based foaming agent degrades the aromatic polycarbonate-based resins (C). Preferred examples of the chemical foaming agent (E) include thermally decomposable inorganic foaming agents that release carbon dioxide gas by being decomposed (e.g., sodium bicarbonate), thermally decomposable foaming agents that release nitrogen gas by being decomposed, and known thermally decomposable foamable compounds, such as 4,4'-oxybis(benzenesulfonylhydrazide) (OBSH), azobisisobutyronitrile, p-toluenesulfonyl hydrazide, and 5-phenyltetrazole.

A content of the chemical foaming agent (E) is appropriately selected in accordance with the types of the chemical foaming agent (E) and the resins that are used, so that a desired expansion ratio can be achieved. The content of the chemical foaming agent (E) is 0.1 to 5 parts by mass, preferably 0.2 to 4 parts by mass, and more preferably 0.3 to 3 parts by mass, per 100 parts by mass of the total of the components (A) to (C). When the content of the chemical foaming agent (E) is less than 0.1 parts by mass, the excessively low content of the chemical foaming agent (E) makes it difficult to achieve a uniformity of the cell diameters of the foam. When the content of the chemical foaming agent (E) is greater than 5 parts by mass, the excessively high content of the chemical foaming agent (E) results in mold fouling due to residues of the chemical foaming agent (E), and, consequently, it is difficult to produce a molded foam article having an excellent appearance.

[Component (F): Inorganic Filler (F)]

The thermoplastic resin composition of the present invention may include an inorganic filler (F) (which may hereinafter also be referred to as a "component (F)") if necessary. In instances where the inorganic filler (F) is included, stable production of molded foam articles having fine and uniform foam cells may be achieved. Furthermore, the rigidity, thermal stability, and dimensional stability of the molded foam article may be improved.

Specific examples of the inorganic filler (F) for use in the present invention include powders of an inorganic compound, such as talc, wollastonite, calcium carbonate, mica, silica, and titania, and glass fibers. In the present invention, talc is particularly preferable in terms of improving foamability and rigidity.

Talc is commonly known as a hydrated magnesium silicate ($4SiO_2 \cdot 3MgO \cdot H_2O$). Talc is a mineral that primarily includes approximately 60 mass% $SiO_2$ and approximately 30 mass% MgO. The talc that may be used may be surface-treated talc.

In instances where an inorganic filler (F) is to be included, a content of the inorganic filler (F) in the thermoplastic resin composition of the present invention is preferably 0.1 to 20 parts by mass, more preferably 3 to 15 parts by mass, and even more preferably 5 to 10 parts by mass, per 100 parts by mass of the total of the components (A) to (C). Including an inorganic filler (F) in such a ratio enables improvement in the rigidity, thermal stability, and dimensional stability of a molded foam article that is produced.

A particle diameter of the inorganic filler (F) is not particularly limited and is preferably 0.5 to 50 μm and particularly preferably 2 to 20 μm, in terms of a median particle diameter of cumulative volume particle diameters, that is, a 50% average particle diameter (hereinafter also referred to as "D50") as measured by laser diffractometry or the like. When the particle diameter of the inorganic filler (F) is less than 0.5 um, an effect of serving as a nucleating agent cannot be produced, which results in a large foam cell diameter. Accordingly, such a particle diameter is not preferable. When the particle diameter of the inorganic filler (F) is greater than 50 μm, the resulting foam cells are coarse and reduced in number, and, therefore, the molded foam article has low strength and a poor appearance. Accordingly, such a particle diameter is not preferable.

[Other Components]

Cheat Aging Inhibitor>

The thermoplastic resin composition of the present invention may include a heat aging inhibitor. Examples of the heat aging inhibitor include phenolic inhibitors, phosphorus-containing inhibitors, and sulfur-containing inhibitors. Preferably, the heat aging inhibitor may be a ternary mixture system including a phenolic inhibitor, a phosphorus-containing inhibitor, and a sulfur-containing inhibitor. Using such a ternary mixture system as a heat aging inhibitor produces an effect of maintaining a tensile elongation associated with long-time exposure to a high temperature.

Regarding the heat aging inhibitor, examples of the phenolic inhibitor include 2,6-di-tert-butylphenol derivatives, 2-methyl-6-tert-butylphenol derivatives, octadecyl 3-(3,5-di-tert-butyl-4-hydroxyphenyl)propionate, 4,4'-butylidenebis(6-tert-butyl-m-cresol), pentaerythrityl tetrakis [3-(3,5-di-tert-butyl-4-hydroxyphenyl)propionate], 2-[1-(2-hydroxy-3,5-di-tert-pentylphenyl)ethyl]-4,6-di-tert-pentylphenyl acrylate, and 2-tert-butyl-6-(3-tert-butyl-2-hydroxy-5-methylbenzyl)-4-methylphenyl acrylate.

Examples of the phosphorus-containing heat aging inhibitor include tris(2,4-di-tert-butylphenyl)phosphite, cyclic neopentane tetraylbis(2,4-di-tert-butylphenylphophite), distearyl pentaerythritol diphosphite, sodium dihydrogen phosphate, and disodium hydrogen phosphate.

Examples of the sulfur-containing heat aging inhibitor include didodecyl 3,3'-thiodipropionate, dioctadecyl 3,3'-thiodipropionate, pentaerythritol tetrakis(3-laurylpropionate), and dilauryl 3,3'-thiodipropionate.

In the thermoplastic resin composition of the present invention, a content of the heat aging inhibitor is typically 0 to 5 mass% and preferably 0 to 3 mass%. In the thermoplastic resin composition of the present invention, the addition of a heat aging inhibitor improves the heat aging properties of the rubber-reinforced styrenic resin (A) and the styrenic resin (B) but not those of the aromatic polycarbonate-based resin (C); in some instances, the aromatic polycarbonate resin (C) acts as a catalyst for the heat aging inhibitor to promote hydrolysis, and, therefore, there is sometimes a tendency for deterioration to be inhibited by refraining from adding the heat aging inhibitor. With these conflicting effects taken into account, the heat aging inhibitor may be added in an amount of at most 5 mass%, and in this case, an optimal heat-aging-inhibiting effect can be produced.

<Other Additives>

The thermoplastic resin composition of the present invention may include one or more known additives, example of which include weathering agents, lubricants, coloring agents, flame retardants, flame-retarding additives, antistatic agents, and silicone oils.

Preferred examples of the weathering agents include benzotriazole-based agents, triazine-based agents, and benzophenone-based agents.

Preferred examples of the lubricants include ethylenebisstearylamide and hydrogenated castor oils.

Examples of the coloring agents include carbon blacks and red iron oxide.

Examples of the antistatic agents include polyethers and alkyl-group-containing sulfonic acid salts.

<Other Resins>

The thermoplastic resin composition of the present invention may include an additional thermoplastic resin, other than the components (A) to (C), to an extent in which the properties sought by the present invention are not impaired. For example, the additional thermoplastic resin may be present in an amount less than or equal to 20 parts by mass per 100 parts by mass of the total of the components (A) to (D) and the additional resin.

Examples of thermoplastic resins that may be included in the thermoplastic resin composition of the present invention include rubber-reinforced styrenic resins (excluding the component (A)), polyolefin-based resins, vinyl chloride-based resins, acrylic resins, polyester-based resins, polyamide-based resins, polyacetal-based resins, polyphenylene-ether-based resins, and polyarylenesulfide-based resins.

These thermoplastic resins may be used alone or in a combination of two or more.

[Production of Thermoplastic Resin Composition for Foam Molding]

The thermoplastic resin composition of the present invention can be produced by kneading the components with any of a variety of extruders, a Banbury mixer, a kneader, a roll, or the like.

For example, the components (A) to (D) and one or more other components that are used as necessary, which are the chemical foaming agent (E), the inorganic filler (F), and other additives, are kneaded, and, accordingly, pellets of the thermoplastic resin composition of the present invention can be obtained. Specifically, examples of the method include a method in which the components (A) to (D) and other additives that are used as necessary are melted in a twin screw extruder. A heating temperature for the melt kneading is appropriately selected in accordance with the formulation of the thermoplastic resin composition. Typically, the heating temperature is 220 to 260°C.

A preferred method for including the chemical foaming agent (E) is a method in which pellets of the thermoplastic resin composition are dry blended with pellets of a foaming agent masterbatch, subsequently, the blend is fed to a molding machine, and the resin is then plasticized in the molding machine and expanded within a mold. A physical foaming agent may be additionally used. Specific examples of the physical foaming agent include propane, butane, water, and carbon dioxide gas.

[Molded Foam Article]

A molded foam article of the present invention is an article derived from foam molding of the thermoplastic resin composition for foam molding of the present invention.

A method that may be used for molding the molded foam article of the present invention from the thermoplastic resin composition of the present invention may be a known method, examples of which include foam injection molding and foam extrusion molding.

A method for the foam injection molding may be a method called a "core-back injection molding method", in which the thermoplastic resin composition of the present invention is injected into a cavity space formed within a mold of an injection molding machine, and immediately thereafter or after a predetermined time has elapsed, a movable mold or a movable core provided within a movable mold is moved back to a predetermined position at a predetermined speed to enlarge the cavity space, thereby expanding the thermoplastic resin composition; accordingly, a molded foam article can be produced. A temperature of the mold for injection molding is typically much lower than a temperature of the thermoplastic resin composition at the time of injection. Consequently, a dense skin layer substantially free of foam is formed on a surface of the molded foam article formed in contact with a surface of the cavity.

The molded foam article of the present invention may be integrally formed in contact with a surface of a substrate made of a resin or the like. Such a multi-layer article can be formed by a process in which a substrate is placed in the cavity space in advance, and the thermoplastic resin composition of the present invention is injected onto the surface of the substrate. Alternatively, a multi-layer article having a molded foam layer layered on a surface of a substrate can also be formed as follows. In an injection molding machine with two injection units, a substrate is first formed by injecting a resin or the like that forms the substrate; subsequently, a movable core provided within a movable mold is moved back to form a cavity space into which the thermoplastic resin composition of the present invention is to be injected; subsequently, the thermoplastic resin composition of the present invention is injected; and subsequently, the movable core is further moved back to enlarge the cavity space to carry out expansion.

Regarding the foam injection molding according to the present invention, a moving-back speed of the movable mold or a moving-back speed of the movable core provided within a movable mold, that is, the "mold opening speed", is preferably 0.05 to 20 mm/second. More preferably, the mold opening speed is 0.1 to 10 mm/second. When such a mold opening speed is employed, a uniform molded foam article having a suitably fine average cell diameter of 50 to 500 um can be obtained.

When the mold opening speed is less than 0.05 mm/second, cooling is promoted, which may result in insufficient expansion and, therefore, may cause surface irregularities. When the mold opening speed is greater than 20 mm/second, the resulting molded foam article may have a large cell diameter and be non-uniform.

The temperature of the thermoplastic resin composition to be injected is preferably 200 to 280°C and more preferably 220 to 270°C. When the temperature is less than 200°C, the flowability of the thermoplastic resin composition is insufficient, and, in particular, a filling failure may occur at an end portion. When the temperature is greater than 280°C, there is a concern for thermal degradation or the like, depending on the composition of the thermoplastic resin composition.

A mold temperature is preferably 20 to 80°C and particularly preferably 30 to 70°C. When the mold temperature is less than 20°C, the thermoplastic resin composition that is in contact with a surface within the mold is rapidly cooled; consequently, the resulting molded foam article is not uniform, and a filling failure may occur at an end portion. When the mold temperature is greater than 80°C, a portion of the molded foam article formed in contact with the surface of the cavity may not have a uniform skin layer formed thereon. Accordingly, such a mold temperature is not preferable.

The time (mold moving-back delay time) that elapses from the end of the injection of the thermoplastic resin composition before the start of the moving-back of the movable mold or the movable core provided within the movable mold is preferably less than or equal to 3 seconds, depending on the mold opening speed. Alternatively, the moving-back may be started immediately after the completion of the injection. The mold moving-back delay time is preferably 0.1 to 2.5 seconds and particularly preferably 0.1 to 1.5 seconds. When the mold moving-back delay time is greater than 3 seconds, cooling is promoted, and, therefore, the resulting molded foam article may not be uniform.

A degree to which the mold is moved back is not limited and may be set in accordance with a predetermined expansion ratio. In particular, for example, for machine frames of devices, it is preferable that the moving-back of the mold, that is, the mold opening, be carried out such that a final thickness of the molded foam article is 1.1 to 3.0 times greater than an initial thickness of the material that fills the cavity space in the mold. When the ratio between the thicknesses is the expansion ratio, the expansion ratio is preferably 1.1 to 3 and more preferably 1.5 to 2. The degree to which the mold is moved back is typically 2.5 to 30 mm. This is based on the fact that, in many cases, molded foam articles in products have a thickness of 5 to 30 mm, and particularly 5 to 25 mm.

A cooling time depends on dimensions of the molded foam article or a method for the cooling. It is sufficient that the temperature of the molded foam article has been reduced to approximately 40 to 80°C at the time of demolding. Typically, the cooling time may be any length of time greater than or equal to 30 seconds. Even for a large product, a cooling time of 100 seconds is sufficient.

In a method for molding the molded foam article of the present invention, it is possible to insert a fabric or a film into the mold prior to the injection filling.

The molded foam article of the present invention is a molded foam article having a fine foam cell structure and a foam cell size that is uniform in any portion of the molded foam article, which provide excellent mechanical properties of the molded foam article. Specifically, an average diameter of the foam cell diameters is preferably 50 to 500 $\mu$m, more preferably 70 to 450 $\mu$m, and even more preferably 100 to 400 um. Uniform foam cell diameters, with a narrow particle diameter distribution, are preferable. In particular, a uniform molded foam article in which most of the cell diameters of the foam cells of the molded foam article are less than or equal to 400 $\mu$m is preferable.

Regarding the molded foam article of the present invention, the expansion ratio may be a desired ratio. Specifically, the expansion ratio may be 1.01 to 3.0, preferably 1.1 to 2.7, and more preferably 1.5 to 2.5.

The molded foam article of the present invention may have a shape that is selected in accordance with a purpose, uses, and the like. Examples of the shape include plate shapes (sheet shapes), cylindrical shapes, semi-cylindrical shapes, bar shapes, linear shapes, and blocky shapes.

[Uses]

The molded foam article of the present invention can be used, for example, in wood substitutes for display boards, concrete panels, roof insulations, tatami core materials, fusuma doors, and built-in kitchens; civil engineering and construction materials, such as those for bathtub covers and table plates; interior and exterior materials for vehicles, such as those for side moldings, sound-absorbing materials, bumpers, door handles, console boxes, ceiling materials, pillars, center low cluster finish panels, cowl side trim pieces, center outlets, door linings, ash trays, foot rests, steering column covers, lower inserts, lower handle panels, wheel caps, and spoilers; daily necessities, such as containers, trays, and returnable containers; electrical and electronic components, such as television sets, video cassette recorders, air conditioner housings, parabolic antennas, and air conditioner condenser units; sporting goods, such as kickboards and protectors; interior and exterior materials for houses and offices, such as those for walls, floors, machine frames, furniture, decorative sheets, partitions, lattices, fences, gutters, siding boards, and carports; frames for toys, game machines, and the like; cushioning materials, reinforcing materials, insulating materials, core materials, and plywood substitutes.

In addition, the molded foam article of the present invention can be used as an article integrally composited with another article, member, or the like, depending on the use.

EXAMPLES

The present invention will now be described in more detail with reference to Examples and Comparative Examples. The present invention is in no way limited by the Examples described below as long as they are not beyond the purview of the present invention.

In the following description, "parts" means "parts by mass", and "%" means "mass%".

[Ingredients]

In the Examples and Comparative Examples described below, the ingredients used in the thermoplastic resin compositions were resin components produced as described below and commercially available products described below.

[Component (A): Production of ABS Resin (Butadiene-based Rubbery Polymer-Styrene-Acrylonitrile Copolymer) (A-1)]

15 parts of polybutadiene [BR51, manufactured by JSR Corporation, high-cis type, Mooney viscosity ($ML_{1+4}$, 100°C): 33, gel content: 0%], 64 parts of styrene, 21 parts of acrylonitrile, and 140 parts of toluene were charged, under a nitrogen stream, to a stainless steel autoclave equipped with a ribbon-type stirring blade, then, an internal temperature was increased to 75°C, and the contents in the autoclave were stirred for 1 hour to form a uniform solution. Subsequently, 0.45 parts of tert-butyl peroxyisopropylmonocarbonate was added, and the internal temperature was further increased. After the temperature reached 100°C, a polymerization reaction was carried out at a stirring speed of 100 rpm with the temperature being maintained.

When 4 hours had elapsed after the start of the polymerization reaction, the internal temperature was increased to 120°C, and the reaction was allowed to proceed for another 2 hours with the temperature being maintained and thereafter was terminated. After the internal temperature was reduced to 100°C, 0.2 parts of octadecyl 3-(3,5-di-tert-butyl-4-hydroxyphenol)propionate was added. A degree of polymerization was 95%. The reaction mixture was removed from the autoclave, and unreacted materials and the solvent were removed by steam stripping. In an extruder with a vacuum vent of 40 mmφ, a cylinder temperature was adjusted to 220°C, and a degree of vacuum was adjusted to 770 mmHg, to substantially remove volatile components and carry out pelletization. Accordingly, an ABS resin (A-1) was obtained.

The ABS resin (A-1) had a degree of polymerization of 91%, a grafting ratio of 68%, an intrinsic viscosity [η] of an acetone-soluble fraction of 0.39 dl/g, an amount of solubility in hot cyclohexane of 2%, and a weight average molecular weight of 48,000.

[Component (B): Production of AS Resin (Styrene-Acrylonitrile Copolymer) (B-1)]

Two stainless steel autoclaves each equipped with a ribbon blade were connected to each other and purged with nitrogen. Subsequently, 75 parts of styrene, 25 parts of acrylonitrile, and 20 parts of toluene were continuously added to a reaction vessel of a first one of the autoclaves. A solution of 0.16 parts of tert-dodecyl mercaptan and 5 parts of toluene, which was used as a molecular weight regulator, and a solution of 0.1 parts of 1,1'-azobis(cyclohexane-1-carbonitrile) and 5 parts of toluene, which was used as a polymerization initiator, were continuously fed. Regarding the first autoclave, a polymerization temperature was controlled to be 110°C, an average residence time was 2.0 hours, and the degree of polymerization was 57%. The resulting polymer solution was continuously pumped with a pump, which was provided outside the reaction vessel of the first autoclave, and fed to a reaction vessel of the second one of the autoclaves. The amount of the polymer solution pumped was the same as the amount of the styrene, acrylonitrile, toluene, molecular weight regulator, and polymerization initiator that were fed. Regarding the reaction vessel of the second autoclave, the polymerization temperature was 130°C, and the degree of polymerization was 75%. From the copolymer solution formed in the reaction vessel of the second autoclave, the unreacted monomers and solvent were directly removed with a three-stage twin-screw vented extruder. Accordingly, an AS resin (B-1), which had an intrinsic viscosity [η] of 0.64 dl/g and a weight average molecular weight of 122,000, was obtained.

[Component (C): PC Resin (C)]

The aromatic polycarbonate resin: Novarex 7022PJ (viscosity average molecular weight: 20,900), manufactured by Mitsubishi Engineering-Plastics Corporation, was used as PC resin (C-1).

[Component (D): Tetrafluoroethylene Polymer (D)]

The following commercial products were used as the tetrafluoroethylene polymer (D). The number average molecular weights of these tetrafluoroethylene polymers (D) are values determined by the following method.

(D-1): Tetrafluoroethylene homopolymer "Polyflon MPA FA-500H" manufactured by Daikin Industries, Ltd. (number average molecular weight: 500,000)

(D-2): Acrylic polymer-modified tetrafluoroethylene polymer "Metablene A-3800" manufactured by Mitsubishi Chemical Corporation (number average molecular weight: 12,000,000)

(D-3): Tetrafluoroethylene homopolymer "Fluon L172JE" manufactured by AGC Corporation (number average molecular weight: 20,000)

<Measurement by the DSC method and calculation of number average molecular weight>

The heat of crystallization ΔHc (cal/g) was determined using a differential scanning calorimeter DSC (Q200 manufactured by TA Instruments Inc.) and calculated using the following formula.

$$\texttt{Number average molecular weight} = 2.1 \times 10^{10} \Delta Hc^{-5.16}$$

[Component (E): Chemical Foaming Agent (E)]

The chemical foaming agent (E) used was Polythlene EB106, which is a masterbatch (ADCA/ABS=10/90 (mass ratio)) manufactured by Eiwa Chemical Ind. Co., Ltd. The content of the chemical foaming agent was 0.35 parts by mass per 100 parts by mass of the total of the resin components (components (A) to (C)).

[Component (F): Inorganic Filler (F)]

(F-1): Fine powder talc Micro Ace SG-200, manufactured by Nippon Talc Co., Ltd.
(D50 determined by laser diffractometry: 1 um)
(F-2): Wollastonite Nyglos 4W, manufactured by Imerys
(Average particle diameter determined by electron microscope observation: 7 um)
(F-3): Glass fiber "CSF3PE-332ST", manufactured by Nittobo Co., Ltd.
(Average particle diameter determined by electron microscope observation: 13 μm)

[Examples 1 to 9 and Comparative Examples 1 to 9]

[Production of Thermoplastic Resin Composition for Foam Molding]

The ingredients shown in Tables 1 and 2 were combined in the ratios shown in Table 1 and blended in a Henschel mixer. Subsequently, the blend was extruded at 250°C with a twin screw extruder Tex 44, manufactured by The Japan Steel Works, Ltd., to give pre-foam-molding thermoplastic resin pellets.

[Foam Injection Molding]

The foam molding machine used was a 110t electric molding machine (J110AD), manufactured by The Japan Steel Works, Ltd. The obtained thermoplastic resin pellets and a foaming agent masterbatch (chemical foaming agent (E)) were dry blended. The blend was fed to the foam molding machine and subjected to core-back foam injection molding. Accordingly, a molded foam article (plate-shaped article, 100 mm × 100 mm × 3.7 mm (thickness)) was obtained to be used as a specimen for evaluation.
Regarding the foam injection molding, a fill time was 1 second, the mold opening speed was 0.5 mm/second, an injection temperature was 250°C, the mold temperature was 80°C, the mold moving-back delay time was 0 seconds, and the expansion ratio was 1.5.

[Evaluation of Molded Foam Article]

The following evaluations were performed on the obtained molded foam articles, and the results are shown in Tables 1 and 2.

<Observation of Appearance>

(Swirl Marks)

An outer surface of each of the molded foam articles was visually observed, and a degree of deterioration of the surface due to swirl marks was evaluated according to the following criteria.

◎: The surface appearance was excellent, with almost no swirl marks observed.
○: The surface appearance was good, with only a few swirl marks observed.
Δ: The surface appearance was somewhat poor, with swirl marks observed.
×: The surface appearance was poor, with significant swirl marks observed.

(Surface Irregularities)

An outer surface of each of the molded foam articles was visually observed, and a degree of deterioration of the surface due to the formation of surface indentations was evaluated according to the following criteria.

◎: The surface appearance was very excellent, with no surface indentations observed.
○: The surface appearance was good, with only a few surface indentations observed.
Δ: The surface appearance was somewhat poor, with surface indentations observed.
×: The surface appearance was poor, with significant surface indentations observed.

<Observation of Cross Section>

(Cell Breakage)

Each of the molded foam articles was cut in cross section in a thickness direction to observe the cross section, and a degree of cell coalescence due to bursting and bursting of foam cells was evaluated according to the following criteria.

◎: The cells were uniform across the entire cross section, with no cell coalescence due to bursting and bursting of foam cells observed.
○: The cells were relatively uniform across the entire cross section, with only slight cell coalescence due to bursting and bursting of foam cells observed.
Δ: A small number of non-uniform cell portions were present in the cross section, with cell coalescence due to bursting and bursting of foam cells observed.
×: Non-uniform cell portions resulting from cell coalescence due to bursting and bursting of foam cells were observed in a large number of portions of the cross section.

(Cell Shape)

Each of the molded foam articles was cut in cross section in a thickness direction to observe cell shapes in the cross section, and a fineness of the cells was evaluated according to the following criteria.

◎: The cell shapes were very excellent, with fine foam cells having a cell diameter of approximately 100 um being uniformly present.
○: The cell shapes were excellent, with most of the foam cells being fine foam cells having a cell diameter of approximately 100 um.
Δ: Uniformity was somewhat poor, with a small number of foam cells with a cell diameter of approximately 100 to 300 um being present together with fine foam cells having a cell diameter of approximately 100 $\mu$m.
×: Uniformity was poor, with the foam cells having a non-uniform cell diameter of 100 to 300 $\mu$m.

[Table 1]

| | | | | | | | | Examples | | | | |
|---|---|---|---|---|---|---|---|---|---|---|---|---|
| | | | | 1 | 2 | 3 | 4 | 5 | 6 | 7 | 8 | 9 |
| Amounts of ingredients (parts) | Component (A) | ABS resin (A-1) | | 10 | 10 | 10 | 10 | 10 | 10 | 10 | 10 | 10 |
| | Component (B) | AS resin (B-1) | | 25 | 25 | 25 | 25 | 25 | 25 | 25 | 25 | 25 |
| | Component (C) | PC resin (C-1) | | 65 | 65 | 65 | 65 | 65 | 65 | 65 | 65 | 65 |
| | Component (D) | PTFE(D-1) | | 1 | 2 | 1 | 1 | 1 | | | | |
| | | acrylic polymer-modified PTFE(D-2) | | | | | | | 1 | 1 | 1 | 5 |
| | | PTFE(D-3) | | | | | | | | | | |
| | Component (F) | talc (F-1) | | | | 10 | | | | 10 | | |
| | | wollastonite (F-2) | | | | | 10 | | | | 10 | 10 |
| | | glass fiver (F-3) | | | | | | 10 | | | | |
| Observation of appearance | | swirl marks | | ◎ | ◎ | ○ | ○ | ○ | ◎ | ○ | ○ | ○ |
| | | indentations | | ○ | ○ | ◎ | ◎ | ◎ | ○ | ◎ | ◎ | ○ |
| Observation of interior | | cell breakage | | ◎ | ◎ | ◎ | ◎ | ◎ | ◎ | ◎ | ◎ | ◎ |
| | | cell shape | | ◎ | ◎ | ◎ | ◎ | ◎ | ◎ | ◎ | ◎ | ◎ |

[Table 2]

| | | | | | | | | Comparative Examples | | | | |
|---|---|---|---|---|---|---|---|---|---|---|---|---|
| | | | | 1 | 2 | 3 | 4 | 5 | 6 | 7 | 8 | 9 |
| Amounts of ingredients (parts) | Component (A) | ABS resin (A-1) | | 10 | 10 | 10 | 10 | 10 | 10 | 10 | 10 | 10 |
| | Component (B) | AS resin (B-1) | | 25 | 25 | 25 | 25 | 25 | 25 | 25 | 25 | 55 |
| | Component (C) | PC resin (C-1) | | 65 | 65 | 65 | 65 | 65 | 65 | 65 | 65 | 35 |
| | Component (D) | PTFE(D-1) | | | | | | 7 | 10 | | | 1 |
| | | acrylic polymer-modified PTFE(D-2) | | | | | | | | 7 | 10 | |
| | | PTFE(D-3) | | | 1 | | | | | | | |
| | Component (F) | talc (F-1) | | | | 10 | | | | | | |
| | | wollastonite (F-2) | | | | | 10 | | | | | |
| Observation of appearance | | swirl marks | | ○ | ○ | ○ | ○ | Δ | Δ | Δ | Δ | ○ |
| | | indentations | | ○ | ○ | ◎ | ◎ | × | × | × | × | ◎ |
| Observation of interior | | cell breakage | | Δ | Δ | ○ | ○ | ◎ | ◎ | ◎ | ◎ | Δ |
| | | cell shape | | × | Δ | Δ | Δ | ◎ | ◎ | ◎ | ◎ | Δ |

[Discussion]

As is apparent from Tables 1 and 2, excellent molded foam articles having a good surface appearance and a fine and uniform foam cell structure were successfully obtained in Examples 1 to 9, in which the tetrafluoroethylene polymer (D) as the component (D) was included in the thermoplastic resin composition for foam molding.

On the other hand, in Comparative Examples 1, 3, and 4 where the tetrafluoroethylene polymer (D) was not blended, as well as in Comparative Example 2 where the tetrafluoroethylene polymer (D) was blended, the number average molecular weight was lower than the specified range of the present invention, and the foam cell structure was particularly poor.

In Comparative Examples 5 to 8, although the tetrafluoroethylene polymer (D) according to the present invention was used but due to the large amount blended, the appearance was poor.

In Comparative Example 9, the blending amount of the tetrafluoroethylene polymer (D) satisfies the range of the present invention, but the foamed cell structure was inferior, since the amount of the styrene resin (B) as the component (B) is large, and the amount of the aromatic polycarbonate resin (C) as the component (C) is large.

Although the present invention has been described in detail by way of the specific modes, it is apparent for those skilled in the art that various changes can be made without departing from the spirit and scope of the present invention.

The present application is based on Japanese Patent Application No. 2021-201814 filed on December 13,2021, the entire contents of which are incorporated herein by reference.

**Claims**

1. A thermoplastic resin composition for foam molding comprising:

   a component (A), listed below, in an amount of 1 to 20 parts by mass;
   a component (B), listed below, in an amount of 0 to 50 parts by mass;
   a component (C), listed below, in an amount of 40 to 90 parts by mass; and
   a component (D), listed below,
   wherein a total of the components (A) to (C) is 100 parts by mass, and an amount of the component (D) is 0.1 to 5 parts by mass per 100 parts by mass of the total of the components (A) to (C):

   component (A): a rubber-reinforced styrenic resin (A) derived from polymerization, in the presence of a rubbery polymer (a), of a vinyl monomer (b1), the vinyl monomer (b1) being an aromatic vinyl compound or an aromatic vinyl compound and another vinyl monomer copolymerizable with the aromatic vinyl compound;
   component (B): a styrenic resin (B) derived from polymerization a vinyl monomer (b2), the vinyl monomer (b2) being an aromatic vinyl compound or an aromatic vinyl compound and another vinyl monomer copolymerizable with the aromatic vinyl compound; and
   component (C): an aromatic polycarbonate resin (C); and
   component (D):a tetrafluoroethylene polymer (D) having a number average molecular weight of 100,000 or more as determined by the DSC method.

2. The thermoplastic resin composition for foam molding according to Claim 1 , further comprising a chemical foaming agent (E) in an amount of 0.1 to 5 parts by mass per 100 parts by mass of the total of the components (A) to (C) .

3. The thermoplastic resin composition for foam molding according to Claim 1 or 2, further comprising an inorganic filler (F) in an amount of 0.1 to 20 parts by mass per 100 parts by mass of the total of the components (A) to (C).

4. The thermoplastic resin composition for foam molding according to any one of Claims 1 to 3, for use in core-back foam injection molding.

5. A molded foam article derived from molding of the thermoplastic resin composition for foam molding according to any one of Claims 1 to 4.

6. A molded foam article derived from core-back foam injection molding of the thermoplastic resin composition for foam molding according to any one of Claims 1 to 4.

## INTERNATIONAL SEARCH REPORT

| International application No. |
| --- |
| **PCT/JP2022/030606** |

### A. CLASSIFICATION OF SUBJECT MATTER

*C08J 9/04*(2006.01)i; *C08J 9/06*(2006.01)i; *C08K 3/013*(2018.01)i; *C08L 25/04*(2006.01)i; *C08L 27/18*(2006.01)i; *C08L 55/02*(2006.01)i; *C08L 69/00*(2006.01)i
FI: C08J9/04 101; C08J9/06 CFD; C08K3/013; C08L25/04; C08L27/18; C08L55/02; C08L69/00

According to International Patent Classification (IPC) or to both national classification and IPC

### B. FIELDS SEARCHED

Minimum documentation searched (classification system followed by classification symbols)

C08J9/00-9/42; C08K; C08L

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 6-240129 A (GENERAL ELECTRIC COMPANY) 30 August 1994 (1994-08-30)<br>claims, paragraphs [0021], [0022], [0025], [0026], [0028]-[0031] | 1-6 |
| X | JP 2014-118539 A (TEIJIN LTD) 30 June 2014 (2014-06-30)<br>claims, paragraphs [0018], [0022], [0030]-[0034], [0045], examples | 1, 3-6 |
| A | | 2 |
| X | JP 2014-159510 A (TEIJIN LTD) 04 September 2014 (2014-09-04)<br>claims, paragraphs [0054], [0059], [0067], [0089]-[0091], [0094], [0103], [0134], [0144], examples | 1, 3-6 |
| A | | 2 |
| X | JP 2013-14684 A (TEIJIN CHEMICALS LTD) 24 January 2013 (2013-01-24)<br>claims, paragraphs [0016], [0020], [0063]-[0065], [0073], examples | 1, 3-6 |
| A | | 2 |
| A | JP 2003-253032 A (IDEMITSU PETROCHEM CO LTD) 10 September 2003 (2003-09-10)<br>claims, examples | 1-6 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **29 September 2022** | **11 October 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/030606**

### C.     DOCUMENTS CONSIDERED TO BE RELEVANT

| Category* | Citation of document, with indication, where appropriate, of the relevant passages | Relevant to claim No. |
|---|---|---|
| A | JP 2004-269583 A (IDEMITSU PETROCHEM CO LTD) 30 September 2004 (2004-09-30) claims, examples | 1-6 |
| A | JP 2006-45375 A (SEKISUI PLASTICS CO LTD) 16 February 2006 (2006-02-16) claims, examples | 1-6 |
| A | JP 7-11035 A (GENERAL ELECTRIC COMPANY) 13 January 1995 (1995-01-13) entire text | 1-6 |
| A | JP 2011-37925 A (TECHNO POLYMER CO LTD) 24 February 2011 (2011-02-24) entire text | 1-6 |

Form PCT/ISA/210 (second sheet) (January 2015)

23

**INTERNATIONAL SEARCH REPORT**
Information on patent family members

International application No.

**PCT/JP2022/030606**

| Patent document cited in search report | | | Publication date (day/month/year) | Patent family member(s) | | | Publication date (day/month/year) |
|---|---|---|---|---|---|---|---|
| JP | 6-240129 | A | 30 August 1994 | US claims, examples EP | 5314925 601785 | A A1 | |
| JP | 2014-118539 | A | 30 June 2014 | (Family: none) | | | |
| JP | 2014-159510 | A | 04 September 2014 | (Family: none) | | | |
| JP | 2013-14684 | A | 24 January 2013 | (Family: none) | | | |
| JP | 2003-253032 | A | 10 September 2003 | TW | 200508299 | A | |
| JP | 2004-269583 | A | 30 September 2004 | TW | 200508299 | A | |
| JP | 2006-45375 | A | 16 February 2006 | (Family: none) | | | |
| JP | 7-11035 | A | 13 January 1995 | US EP | 5272182 601783 | A A1 | |
| JP | 2011-37925 | A | 24 February 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008133485 A
- JP 2010254833 A
- JP 2011037925 A
- JP 47028915 B
- JP 47003252 B
- JP 48002423 B
- JP 48020038 B
- JP 2133406 A
- JP 2305814 A
- JP 3072512 A
- JP 428704 B
- JP 436636 B
- JP 63004841 B
- JP 63005401 B
- JP 1297413 A
- US 3419634 A
- JP 2021201814 A